# EUROPÄISCHE PATENTSCHRIFT

(11) **EP 2 012 997 B1**
(45) Veröffentlichungstag und Bekanntmachung des Hinweises auf die Patenterteilung: **02.06.2010**
(21) Anmeldenummer: 07718401.8
(22) Anmeldetag: 24.04.2007
(51) Int. Cl.: B29C 47/60, B29C 47/68, B29C 47/76

(54) **EXTRUDER ZUM ENTGASEN UND FILTERN VON KUNSTSTOFFSCHMELZEN**
DEVICE FOR DEGASSING AND FILTERING PLASTIC MELTS
EXTRUDEUSE POUR DÉGAZER ET FILTRER DES MASSES FONDUES DE MATIÈRES SYNTHÉTIQUES

(30) Priorität: 27.04.2006 AT 7132006
(43) Veröffentlichungstag der Anmeldung: 14.01.2009
(73) Patentinhaber: EREMA Engineering Recycling Maschinen und Anlagen Gesellschaft m.b.H., 4052 Ansfelden (AT)
(72) Erfinder: SCHULZ, Helmuth, 4020 Linz (AT)
(74) Vertreter: Wildhack & Jellinek
(86) Internationale Anmeldenummer: PCT/AT2007/000185
(87) Internationale Veröffentlichungsnummer: WO 2007/124519

(56) Entgegenhaltungen:
- DE-A1- 1 502 335
- DE-B- 1 174 054
- GB-A- 1 171 590
- US-A- 3 874 090

## Beschreibung

### Technisches Gebiet

Die Erfindung betrifft eine Vorrichtung zum Extrudieren von thermoplastischem Kunststoffgut, mit einer in einem Gehäuse gelagerten Extruderschnecke, die einen zulaufseitigen Plastifizierungsabschnitt, einen einem Austragsabschnitt vorgelagerten Entgasungsabschnitt und zwischen dem Plastifizierungsabschnitt und dem Entgasungsabschnitt einen gegenläufigen Fördergang umfaßt, und mit wenigstens einem den gegenläufigen Fördergang überbrückenden, ein Schmelzenfilter enthaltenden Strömungskanal.

### Stand der Technik

Damit sollen Kunststoffe, insbesondere Kunststoffabfälle, welche vor der weiteren Verarbeitung einen Entgasungs- bzw. einen Reinigungsvorgang benötigen, zweckmäßig entgast und aufbereitet werden können. Bei der Aufbereitung von Kunststoffen aus Produktionsabfall bzw. aus bereits im Umlauf gewesenem Kunststoffmaterial ergibt sich durch Bedruckung, Lackierung oder Verschmutzung das Erfordernis, diese Kunststoffe vor einer Wiederverwendung zu reinigen. Dazu ist es bekannt (WO 93/04841 A1), den aufzubereitenden Kunststoff in einem Extruder aufzuschmelzen, durch einen Filter zu drücken und vor einer Weiterverarbeitung bzw. einer Granulierung zu entgasen. Um dabei einen Übertritt von dem Plastifizierungsabschnitt zum Entgasungs- bzw. Austragsabschnitt von aufgeschmolzenem Kunststoff zu vermeiden und zu gewährleisten, daß sämtlicher aufgeschmolzener Kunststoff durch das Schmelzenfilter geleitet wird, ist zwischen dem Plastifizierungsabschnitt und dem Entgasungsabschnitt ein gegenläufiger Fördergang, also eine Art Rückfördergewinde bzw. ein Dichtgewinde, vorgesehen, das eine dem Schneckengewinde von Plastifizierungsabschnitt, Entgasungsabschnitt und Austragsabschnitt entgegengesetzte Steigung aufweist. Durch dieses bekannte Rückfördergewinde wird ein geringer Anteil an bereits durch den Schmelzenfilter geströmtem und gereinigtem Kunststoff wieder in den Plastifizierungsabschnitt rückgefördert, wodurch vermieden werden soll, daß ungereinigtes Kunststoffgut unmittelbar unter Umgehung des Schmelzenfilters in den Entgasungs- und den Austragsabschnitt gelangt. Die einlauf- und die auslaufseitigen Mündungen des den Schmelzenfilter enthaltenden Strömungskanals sind zur Vermeidung von Toträumen direkt neben dem Rückfördergewinde angeordnet. Damit soll vermieden werden, daß es zu verlängerten Verweilzeiten des Kunststoffgutes in der Vorrichtung und in der Folge zu einer thermischen Schädigung des Kunststoffes kommt. Von Nachteil ist bei dieser Vorrichtung insbesondere, daß es sich bei dem gegenläufigen Fördergang um eine Art dynamische Dichtung handelt, die je nach Drehzahl der Extruderschnecke dicht ist oder nicht. Auch die Viskosität des Kunststoffes ist dabei sehr von Bedeutung, da beispielsweise mit Feuchtigkeit behafteter Kunststoff Dämpfe bildet, die nicht an einem direkten Übertritt vom Plastifizierungsabschnitt in den Entgasungsabschnitt durch den Fördergang hindurch gehindert werden können. Diese Dämpfe sind unter anderem Träger für Schmutzstoffe, die am Filter vorbei in den Entgasungsabschnitt eingetragen werden und den bereits gefilterten Kunststoff wiederum verunreinigen, wodurch keine gleichbleibende Qualität des entgasten und gereinigten Kunststoffes gewährleistet werden kann. Zudem kann es durch übermäßige Ausgasungen, beispielsweise durch Feuchtigkeit im Kunststoff, zu Druckschwankungen in der Vorrichtung kommen.

### Darstellung der Erfindung

Ausgehend von einem Stand der Technik der eingangs geschilderten Art liegt der Erfindung die Aufgabe zugrunde, die oben genannten Nachteile zu vermeiden und eine Vorrichtung mit verbessertem Entgasungseffekt zu schaffen, die einen direkten Material- und Gasübertritt vom Plastifizierungsabschnitt in den Entgasungsabschnitt durch den Fördergang hindurch vermeidet.

Die Erfindung löst diese Aufgabe dadurch, daß die Extruderschnecke zwischen dem gegenläufigen Fördergang und der auslaufseitigen Mündung des Strömungskanals einen gleichläufigen Fördergang bildet und daß das Gehäuse im Übergangsbereich zwischen dem gegenläufigen und dem gleichläufigen Fördergang wenigstens eine Entgasungsöffnung aufweist.

Der Erfindung liegt die Erkenntnis zugrunde, daß zur Erzeugung von qualitativ gleichbleibendem, gereinigtem und entgastem Kunststoff Gasübertritte zwischen dem Plastifizierungsabschnitt und dem Entgasungsabschnitt zwingend zu vermeiden sind. Dies wird mit der Erfindung dadurch erreicht, daß einerseits ein Materialübertritt vom Plastifizierungsabschnitt zum Entgasungsabschnitt hin durch den gegenläufigen Fördergang vermieden wird. Gleichermaßen wird ein Übertritt von bereits gereinigtem Kunststoff vom Entgasungsabschnitt zum Plastifizierungsabschnitt hin durch den zwischen dem gegenläufigen Fördergang und der auslaufseitigen Mündung des Strömungskanals angeordneten gleichläufigen Fördergang vermieden. Damit wird eine Trennung der beiden Abschnitte geschaffen, die es erlaubt, eine Entgasungsöffnung bzw. überwachbare Austrittsöffnung und/oder eine Art drucklosen Raum zwischen den beiden Abschnitten vorzusehen.

Vom Plastifizierungsabschnitt in den gegenläufigen Fördergang eintretende Gase und Schmutzteilchen können somit in einfacher Weise am direkten Übertritt in den Entgasungsabschnitt gehindert und aus der Vorrichtung abgeleitet werden. Dieses Entgasen und Ableiten kann in üblicher Weise durch einen Anschluß der Entgasungsöffnung an eine Vakuumpumpe gezielt unterstützt werden. Materialübertritte durch stark ausgasende Materialien bzw. durch verdampfendes Wasser können auf diese Art in einfacher Weise ausgeglichen bzw. unterbunden werden. Mit der Erfindung sind der Plastifizierungs- und der Filtrierungsabschnitt mit dem Entgasungs- und Austragungsabschnitt druckmäßig lediglich über den Strömungskanal gekoppelt, was eine gleichbleibende Füllung der Austragsschnecke und eine gleichbleibende Entgasung des Kunststoffes gewährleistet. Damit ist sichergestellt, daß keine Schmutzteilchen vom Plastifizierungsabschnitt in den Ausgasungsabschnitt gelangen, ohne über den Schmelzenfilter geleitet zu werden.

Zur Verschleißminderung des an den Plastifizierungsabschnitt anschließenden gegenläufigen Förderganges infolge von in den Fördergang eindringendem ungereinigtem, plastifiziertem Kunststoff, ist es von Vorteil, wenn der Strömungskanal auf der Austrittsseite des Schmelzenfilters durch wenigstens einen Rückführkanal, vorzugsweise über ein Rückschlagventil, zulaufseitig mit dem gegenläufigen Fördergang der Extruderschnecke verbunden ist. Damit kann ein gezielter, geringer Rückstrom an gereinigtem Kunststoff durch den Fördergang hindurch zum Plastifizierungsabschnitt hin sichergestellt und somit ein Eindringen von verunreinigtem Kunststoff in den gegeläufigen Fördergang vermieden werden. Mit dem Rückschlagventil wird ein Überströmen von ungefiltertem Kunststoff zur gefilterten Seite hin, insbesondere beim Anlaufen der Vorrichtung, sicher vermieden.

Zwecks Verbesserung der Entgasungswirkung ist zwischen dem gegenläufigen und dem gleichläufigen Fördergang der Extruderschnecke ein vorzugsweise gangloser Entgasungsraum vorgesehen, der von der Extruderschnecke und/oder vom Gehäuse ausgebildet wird. Über die Entgasungsöffnung werden über den gegenläufigen und den gleichläufigen Fördergang in diesen Bereich eindringende Gase einfach aus der Vorrichtung abgeleitet und ist die gewünschte Druckentkopplung sicher gewährleistet.

Sollte infolge von sehr geringer Viskosität des aufgeschmolzenen Kunststoffes, von Verschleiß des gegenläufigen Förderganges od. dgl. plastifizierter Kunststoff über den gegenläufigen Fördergang in Richtung des gleichläufigen Fördergangs hin eindringen, empfiehlt es sich zur Vermeidung des Übertrittes von Kunststoff, zwischen dem Entgasungsraum und dem gleichläufigen Fördergang einen gegenläufigen Fördergangsabschnitt, vorzugsweise mit einer geringeren Ganghöhe, vorzusehen.

Um die Strömungsdichtheit des gleichläufigen Förderganges zu verbessern, kann der Extruderschnecke im Bereich der auslaufseitigen Mündung des Strömungskanals ein Stauelement zugehören. Dieses Stauelement kann beispielsweise ein Ringelement, eine verringerte Steigung an der Förderschnecke und/oder ein gegenüber dem Entgasungsabschnitt vergrößerter Schneckenkerndurchmesser sein. Damit wird der Gegendruck des Kunststoffgutes gegen den gleichläufigen Fördergang erhöht.

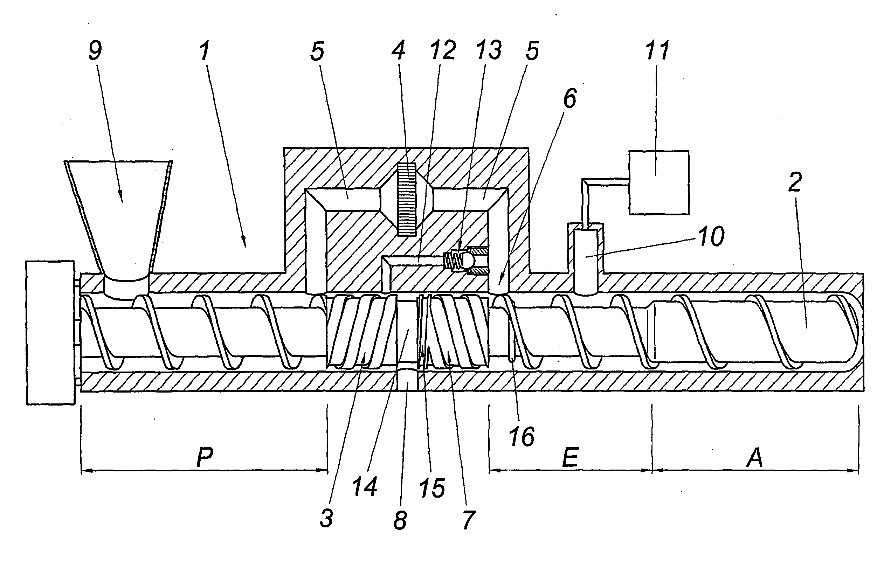

### Kurze Beschreibung der Zeichnung

In der Zeichnung ist die Erfindung anhand eines schematischen Ausführungsbeispieles einer im Querschnitt dargestellten erfindungsgemäßen Vorrichtung dargestellt.

### Weg zur Ausführung der Erfindung

Eine Vorrichtung zum Extrudieren von thermoplastischem Kunststoffgut umfaßt eine in einem Gehäuse 1 gelagerte Extruderschnecke 2, die einen zulaufseitigen Plastifizierungsabschnitt P und einen einem Austragsabschnitt A vorgeordneten Entgasungsabschnitt E aufweist. Zwischen dem Plastifizierungsabschnitt P und dem Entgasungsabschnitt E sind ein gegenläufiger Fördergang 3 und ein den gegenläufigen Fördergang 3 überbrückender, ein Schmelzenfilter 4 enthaltender Strömungskanal 5 vorgesehen. Um einen direkten Übertritt von im Plastifizierungsabschnitt entstehenden Gasen in den Entgasungsabschnitt zu vermeiden, bildet die Extruderschnecke 2 zwischen dem gegenläufigen Fördergang 3 und der auslaufseitigen Mündung 6 des Strömungskanals 5 in den Entgasungsabschnitt (E) einen gleichläufigen Fördergang 7 aus und weist das Gehäuse 1 im Übergangsbereich zwischen dem gegenläufigen und dem gleichläufigen Fördergang 3, 7 eine Entgasungsöffnung 8 auf, durch die in den Fördergangbereich eindringende Gase und Verunreinigungen aus der Vorrichtung 1 vorteilhaft abgeführt werden können und eine Druckentkopplung gewährleistet wird.

Aufzubereitender Kunststoff wird der Vorrichtung 1 über eine Einfüllöffnung 9 zugeführt, von der Extruderschnecke 2 im Plastifizierungsabschnitt P aufgeschmolzen, über den Strömungskanal 5 durch den Schmelzenfilter 4 geleitet und anschließend im Entgasungsabschnitt P entgast, wozu in diesem Bereich gegebenenfalls an eine Vakuumpumpe 11 angeschlossene Entgasungsöffnungen 10 vorgesehen sind. Für die Entgasungsöffnung 8 kann bei Bedarf selbstverständlich ebenfalls eine Vakuumpumpe vorgesehen sein. Nach erfolgtem Entgasungsvorgang wird der Kunststoff über den Austragsabschnitt A aus der Vorrichtung 1 ausgebracht und gegebenenfalls einer Gußform, einem Granulierkopf od. dgl. zugeführt. Durch die beiden Fördergänge 3, 7 wird ein Eindringen von Kunststoff sowohl von der Plastifizierungsabschnittseite, als auch von der Entgasungsseite her in diesen Abschnitt vermieden.

Der Strömungskanal 5 ist auf der Austrittsseite des Schmelzenfilters 4 durch einen Rückführkanal 12 über ein Rückschlagventil 13 zulaufseitig mit dem gegenläufigen Fördergang 3 der Extruderschnecke 2 verbunden. Dadurch wird erreicht, daß während des Betriebes der Vorrichtung ein geringer Anteil an bereits gereinigtem Kunststoff bewußt in Richtung des Plastifizierungsabschnittes rückgefördert wird, womit ein Eindringen von verschmutztem, verschleißförderndem Kunststoff in den Fördergang 3 vermieden wird. Zur verbesserten Entgasung ist zwischen dem gegenläufigen und dem gleichläufigen Fördergang der Extruderschnecke 2 ein gangloser Entgasungsraum 14 vorgesehen. Zwischen dem Entgasungsraum 14 und dem gleichläufigen Fördergang 7 ist ein gegenläufiger Fördergangsabschnitt 15 mit einer geringeren Ganghöhe angeordnet, um die Sicherheit gegen einen Übertritt von Kunststoff von der Plastifizierungsseite zur Entgasungsseite hin zu erhöhen. Der Extruderschnecke 2 gehört im Bereich der auslaufseitigen Mündung des Strömungskanals 5 ein Stauelement 16, in Form eines Stauringes zu, um die Gasdichtheit des gleichläufigen Förderganges 7 zu erhöhen.

## Patentansprüche

1. Vorrichtung zum Extrudieren von thermoplastischem Kunststoffgut, mit einer in einem Gehäuse (1) gelagerten Extruderschnecke (2), die einen zulaufseitigen Plastifizierungsabschnitt, einen einem Austragsabschnitt vorgelagerten Entgasungsabschnitt und zwischen dem Plastifizierungsabschnitt und dem Entgasungsabschnitt einen gegenläufigen Fördergang umfaßt, und mit wenigstens einem den gegenläufigen Fördergang überbrückenden, ein Schmelzenfilter enthaltenden Strömungskanal, **dadurch gekennzeichnet, daß** die Extruderschnecke (2) zwischen dem gegenläufigen Fördergang (3) und der auslaufseitigen Mündung (6) des Strömungskanals (5) einen gleichläufigen Fördergang (7) bildet und daß das Gehäuse (1) im Übergangsbereich zwischen dem gegenläufigen (3) und dem gleichläufigen Fördergang (7) wenigstens eine Entgasungsöffnung (8) aufweist.

2. Vorrichtung nach Anspruch 1, **dadurch gekennzeichnet, daß** der Strömungskanal (5) auf der Austrittsseite des Schmelzenfilters (4) durch wenigstens einen Rückführkanal (12), vorzugsweise über ein Rückschlagventil (13), zulaufseitig mit dem gegenläufigen Fördergang (3) der Extruderschnecke (2) verbunden ist.

3. Vorrichtung nach Anspruch 1 oder 2, **dadurch gekennzeichnet, daß** zwischen dem gegenläufigen und dem gleichläufigen Fördergang (3, 7) der Extruderschnecke (2) ein gangloser Entgasungsraum (14) vorgesehen ist.

4. Vorrichtung nach Anspruch 3, **dadurch gekennzeichnet, daß** zwischen dem Entgasungsraum (14) und dem gleichläufigen Fördergang ein gegenläufiger Fördergangabschnitt (15), vorzugsweise mit einer geringeren Ganghöhe, vorgesehen ist.

5. Vorrichtung nach einem der Ansprüche 1 bis 4, **dadurch gekennzeichnet, daß** der Extruderschnecke (2) im Bereich der auslaufseitigen Mündung des Strömungskanals (5) ein Stauelement (16) zugehört.

## Claims

1. Device for extruding thermoplastic synthetic material comprising an extruder screw (2) supported within a housing (1) and including a plastification section at the supply side, a degassing section upstream a discharge section, and a reverse motion conveying portion between said plastification section and said degassing section, and further comprising at least one flow channel, including a melt filter, which bridges said reverse motion conveying portion, **characterised in that** said extruder screw (2) forms an equal motion conveying portion (7) between said reverse motion conveying portion and the orifice (6) at the discharge side of said flow channel (5), and that said housing (1) comprises at least one degassing opening (8) in the transition zone between said reverse motion conveying portion (3) and said equal motion conveying portion (7).

2. Device according to claim 1, **characterised in that** said flow channel (5) communicates with said reverse motion conveying portion (3) of said extruder screw (2) at the supply side and by a return channel (12), preferably via a non-return valve (13), at the outlet side of said melt filter (4).

3. Device according to claim 1 or 2, **characterised in that** a spiral-less degassing space (14) is provided between said reverse motion and said equal motion conveying portions (3, 7) of said extruder screw (2).

4. Device according to claim 3, **characterised in that** a section of reverse conveying motion (15), preferably of a smaller lead, is provided between said degassing space (14) and said equal motion conveying portion.

5. Device according to any of claims 1 to 4, **characterised in that** a chocking element (16) is assigned to said extruder screw (2) in the region of the discharge sided orifice of said flow channel (5).

## Revendications

1. Dispositif pour boudiner de matière synthétique thermoplastique, comprenant une vis d'extrudeuse (2) logée dans un boîtier (1) et qui inclue une section de plastification au côté d'alimentation, une section de dégazage en amont d'une section de décharge, et des spires de déplacement opposé entre la section de plastification et la section de dégazage, et ayant au moins un conduit d'écoulement, qui contient un filtre de fonte et qui ponte les spires de refoulement à déplacement opposé, **caractérisé en ce, que** la vis d'extrudeuse (2) forme des spires de refoulement à déplacement égal (7) entre les spires à déplacement opposé (3) et l'orifice (6) au côté de décharge du conduit d'écoulement (5), et que le boîtier (1) comprend au moins une ouverture de dégazage (8) dans la zone de transition entre les spires de refoulement à déplacement opposé (3) et à déplacement égal (7).

2. Dispositif selon la revendication 1, **caractérisé en ce, que** le conduit d'écoulement (5) est en communication avec les spires de refoulement à déplacement opposé (3) de la vis d'extrudeuse (2) au côté d'alimentation, et au côté de sortie du filtre de fonte par au moins un conduit de retour (12), de préférence à travers d'un soupape de non-retour (13).

3. Dispositif selon la revendication 1 ou 2, **caractérisé en ce, qu**'un espace de dégazage (14) sans spires est prévu entre les spires à déplacement opposé et à déplacement égal (3, 7) de la vis d'extrudeuse (2).

4. Dispositif selon la revendication 3, **caractérisé en ce, qu**'une section de refoulement à spires à déplacement opposé (15), préférablement à un pas plus petit, est prévu entre l'espace de dégazage (14) et les spires de refoulement à déplacement égal.

5. Dispositif selon une quelconque des revendications 1 à 4, **caractérisé en ce, qu**'un élément de retenue (16) est associé à la vis d'extrudeuse (2) dans la zone de l'orifice du conduit d'écoulement (5) au côté de décharge.
